**Europäisches Patentamt**

**European Patent Office**

**Office européen des brevets**

(11) Publication number: **0 142 959**
**A1**

(12) # EUROPEAN PATENT APPLICATION

(21) Application number: **84307589.6**

(22) Date of filing: **02.11.84**

(51) Int. Cl.⁴: **G 03 B 27/44**

(30) Priority: **10.11.83 ES 527170**
**18.11.83 ES 275825 U**

(43) Date of publication of application:
**29.05.85 Bulletin 85 22**

(84) Designated Contracting States:
**AT BE CH DE FR GB IT LI LU NL SE**

(71) Applicant: **SOLIS/COLOR S.A.**
**Carretera del Mig, 173**
**L'Hospitalet de Llobregat (Barcelona)(ES)**

(72) Inventor: **Torrens-Carrera, Antonio-Maria**
**E-08025 Barcelona**
**Provenza 420(ES)**

(74) Representative: **Bayliss, Geoffrey Cyril et al,**
**BOULT, WADE & TENNANT 27 Furnival Street**
**London EC4A 1PQ(GB)**

(54) **Method for obtaining a photographic composition of two identical images in orthogonal arrangement and device for carrying out this procedure.**

(57) A beam of light (5) is directed through a negative (4) and two objective systems (6, 7) are disposed in the resulting light path to create two separate optical paths. One path from objective (6), forms a main image (2) on a light-sensitive paper (1) via two parallel mirrors (8, 9). A second path, from objective (7) passes via two right angled reflecting assemblies (10, 11) angled at 135° (Angle A) to each other to form a secondary image (3) on the paper (1) with the image (3) turned through 90° with respect to the image (2).

FIG. 2

Croydon Printing Company Ltd.

METHOD FOR OBTAINING A PHOTOGRAPHIC
COMPOSITION OF TWO IDENTICAL IMAGES
IN ORTHOGONAL ARRANGEMENT AND DEVICE
FOR CARRYING OUT THIS PROCEDURE"

This invention relates to a procedure for obtaining a photographic composition of two identical images in which the two images correspond to the same negative, i.e. they are identical but with the particular feature that one is placed orthogonally with regards to the other. Likewise the invention refers to a device for carrying out the said procedure.

It is therefore a question of having the image in the negative appear twice on a sheet of light-sensitive paper, at the expense of a particular negative and by means of the procedure in question, with one of the images being displaced 90° with respect to the other and laterally juxtaposed.

For this, the procedure proposed by the invention is based on the use of two systems of objective, one of which is destined to the formation of the main image, and the other is destined for the formation of the secondary image, which is displaced 90° with respect to the former. The first objective system is designed to transfer the negative image directly to the corresponding sector on the light-sensitive paper, allowing the displacement laterally of the said image so as to obtain a perfect centering of this image, while the second objective system, from the same negative and with the collaboration of two reflecting assemblies, carries out the foreseen turn of the 90° for the secondary image. For this, it has been foreseen that the two reflecting assemblies should be at an angle of 135°, and each one should consist of two orthogonal reflecting elements.

By means of this structuring of each reflecting assembly and the mentioned angle establishing between the two assemblies, the image is turned, parallel to its perfect centering in the corresponding sector on the light-sensitive paper.

The mentioned reflecting assemblies could be materialised in practice by means of mirrors, totally reflecting prisms, or any other type of elements which can establish the two optical tracks foreseen between the negative and the two sectors of the light-sensitive paper.

In accordance with a further embodiment of the invention the two differentiated objective systems mentioned above can be located behind an element with 50% transmittance and reflectance, such as, for example, a semi-metallized mirror or an image-deviating cube, thus making the beam of light split to 50% in two independent trajectories, to which both assemblies similar to those mentioned above are coupled, so as to obtain the centering of the main image with one of them, and the secondary image, turned 90° with regards to the former and adjacent to it on the light-sensitive paper, with the other.

In accordance with another possible variant of the invention, the objective itself, corresponding to the secondary image system, can be located between the two reflecting assemblies, which are still at 135° and consisting of two orthogonal reflecting elements.

In the latter embodiment, the device for the invention is made up basically of a plate-holder, which is complemented with the corresponding housing, on which supports are established for two objectives which receive the beam of light passing through the photograph negative independently.

One of such objectives is destined to obtaining the main image, i.e. the image that will adopt the conventional positioning on the light-sensitive paper, in accordance with the position of the negative, while the second objective a first pair of orthogonal mirrors collaborate, producing a double orthogonic deviation in the same direction for the beam of light, which is found with a second pair of orthogonal mirrors, in which two more orthogonic deviations opposite the first are produced, but with the particular feature that the first and second pairs of mirrors make an angle of 135°, so the final trajectory of the beam of light, still recouping the original direction, undergoes a turn in its position which gives rise to, in accordance with the pursued aim, the secondary image being displaced 90° with regards to the main image.

The described structure is complemented with a series of adjustment and setting elements which allow the controlling of the position of the mirrors, in order to have the two resulting images correctly placed on the light-sensitive paper.

From the described structuring, it can be deduced that, obvously, depending on the angle formed by the two pairs of mirrors, whether this angle is positive or negative, a different positioning in the displacement of the secondary image with regards to the main image shall be obtained.

So as to facilitate the correct centering of the two images on the light-sensitive paper, and as a complement to the adjustment and setting means for the two pairs of mirrors  mentioned above, the beam of light corresponding to the main objective shall be made to incide on a pair of parallel mirrors, with its specular surfaces put face to face, likewise fitted with adjustment and setting means, with which the beam of light corresponding to the main image is displaced laterally.

Mention must also be made of the fact that the device can be varied by placing a semi-metallized mirror, a prismatic image-deviating device or any other suitable element. with 50% transmittance and reflectance in front of the objective systems.

It is also pointed out that there is another possible modification on placing the actual objective of the secondary system (which forms the image turned 90°) between the two above described reflecting systems.

The following is a description of some specific embodiments of the invention reference being made to the accompanying drawings in which:

Figure 1 shows the result of a photographic image of two identical images, obtained by means of applying the procedure of the invention, with the positioning of the two images being represented in this figure, and in figure 1', various composition possibilities.

Figure 2 is a diagram of the trajectory and orthogonic deviation of the beam of light from the negative to the light-sensitive paper, with the interposition of the two objective systems and their corresponding auziliary reflecting assemblies.

Figure 3 illustrates, also in diagram, a detail of the two reflecting assemblies with which the turn of the secondary image is obtained. the angle formed by the said reflecting assemblies can be observed in detail.

Figure 4 shows a detail of the orthogonic deviation of the beam of light, when a semi-metallized mirror with transmittance and reflectance to 50% is intercalated before the two objective systems.

Figure 5 is a similar representation to that of Figure 4, but in this case the orthogonic deviation of the beam of light is obtained by means of a prismatic image-deviating cube.

Figure 6 shows a perspective view of a device for obtaining a photographic composition of two identical images, realised in accordance with the procedure of this invention.

Figure 7 represents another perspective of the same device, displaced with regards to the previous one, and which collaborates in the detection of the integrating elements of the same.

figure 8 is a diagram, in front elevation, of the objective corresponding to the secondary image and the two pairs of mirrors assisting.

Figure 9 illustrates a side view of the same assembly represented in the above figure.

Figure 10 is a ground view of the same assembly, in which ther angle of 135° formed by the two pairs of mirrors can be observed in detail.

Figure 11 shows a section detail of any one of the mirrors which collaborate in the handling of the beam of light.

From these figures, it can be seen that the procedure in question is specifically designed for obtaining, on the same light-sensitive paper (1), two images (2 and 3), corresponding to the same motive, with image (2) being defined as the main image, while the secondary image (3) is displaced 90° with regards to the main image.

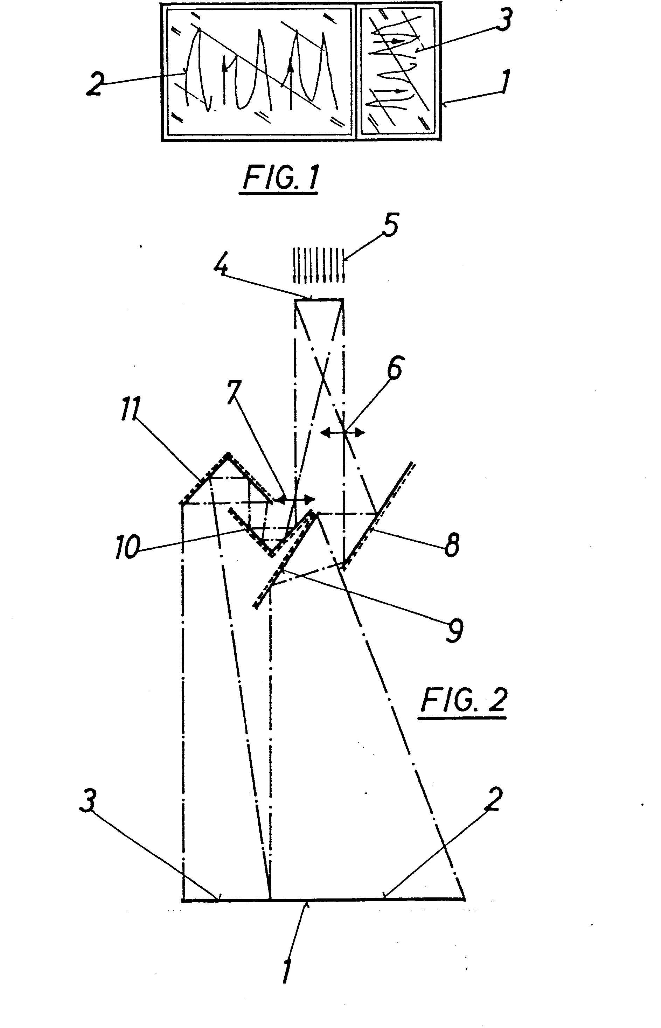

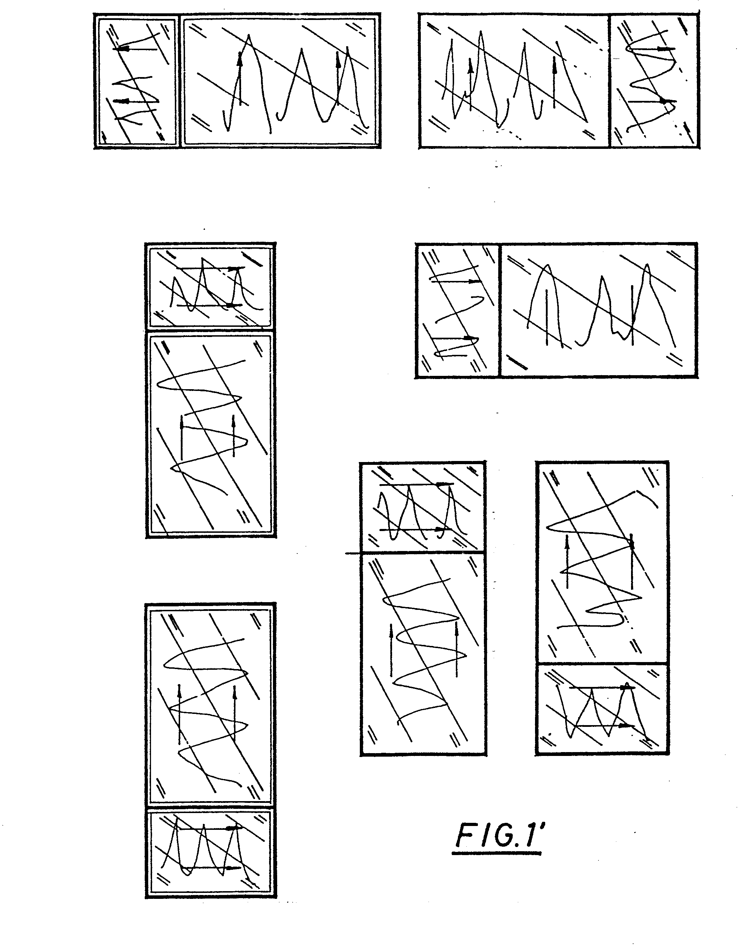

This can be observed in detail in Figure 1, it being obvious that the secondary image (3) can be to the right or to the left of the main image (2) and that its displacement of 90° can also be made by means of a turn to the right or to the left of the image. Both images (2-3) can also be clearly marginal, as has been represented in the diagram, or else a perfect continuity can be established, without the essence of the invention being affected.

In any case, the constant which is maintained is that the major side of the secondary image coincides with the minor side of the main image, as well as their dimensions being proportional, in accordance with the previously mentioned premise.

So as to obtain the mentioned photographic compisition and in accordance with the procedure of the invention, one must start with only one negative (4), which has the image to be repeated, through which, as is conventional, a beam of light (5) is passed, but with the particular feature that in the said-beam of light (5), the two objective systems (6-7) are disposed. These objective systems establish the respective independent, optical tracks for the image transported by the beam of light.

The first system of objective (6) is that which is destined to obtaining the main image (2) on the light-sensitive paper (1) and, for the purpose of centering the main image correctly on the corresponding sector of the paper. the placement of a reflecting assembly has been foreseen. This assembly consists of 2 parallel mirrors (8-9) with which the correct lateral displacement of the image is achieved for the perfect centering on the paper.

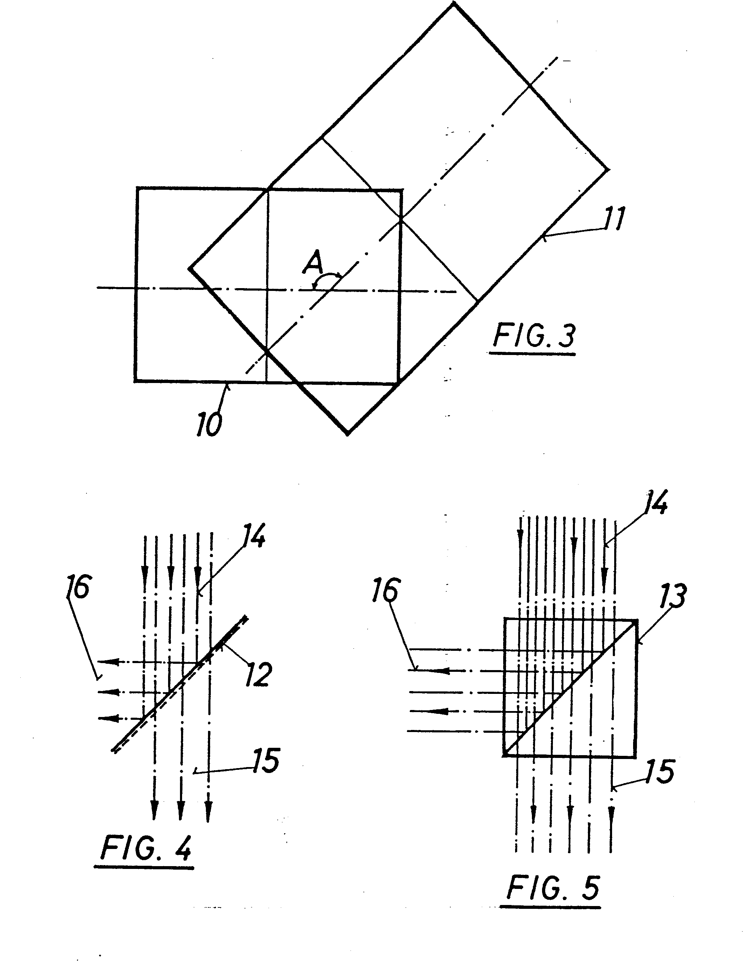

Parallel to this, in the second optic track, that corresponding to the objective system (7) two reflecting assemblies (10-11) are placed, each of which is made up of two orthogonal mirrors, and with the concrete and specific feature that the mentioned reflecting assemblies (10-11) are at an angle of 135° (Angle A), as can be observed with detail in Figure 3. By means of this angle formed by the two reflecting assemblies (10-11) and the correct relative positioning between the same and with respect to objective (7), a perfect centering of the secondary image (3) is obtained on the corresponding sector of the light-sensitive paper, in which the image is turned 90° with respect to the main image (2), due precisely to the angle of 135° formed by the two reflecting assemblies (10-11).

Is is obvious that depending on whether the mentioned angle goes in one direction or another, the secondary image (3) shall also be turned 90° in one direction or another with respect to the main image (2), and that depending on the positioning of the negative (4), the secondary image can be to the right or to the left of the main image.

As has been said before, in the procedure of the invention, the possibility of using a single objective system has been foreseen; for this the possibility of using an element with 50% transmittance and reflectance, as for example, the semi-metallised mirror (12) seen in figure 4, or the prismatic image-deviating cube (13) in Figure 5 is essential. In any case, the single beam of light (14) reaches the semi-metallised mirror (12) or the cube (13), it splits into two beams, one of which (15) is used for obtaining the main image (2), which can accede directly to the corresponding sector of the light-sensitive paper or else be laterally displaced with the collaboration of the reflecting assembly (8-9) while the other beam (16) which is perpendicular, will with the collaboration of the reflecting assemblies (10-11) give rise to the secondary image turned 90° with regards to the main image.

Obvously, and as can be seen in observing the figures, beam (15) corresponds to 50% of the main beam (14) which crosses element (12-13) while beam (16) corresponds to the 50% reflected.

In any case, in accordance with the basic purpose of the invention, the composition is obtained from a single negative, on the same light-sensitive paper, with the images being adjacent and one with its positioning displaced 90° with respect to the other.

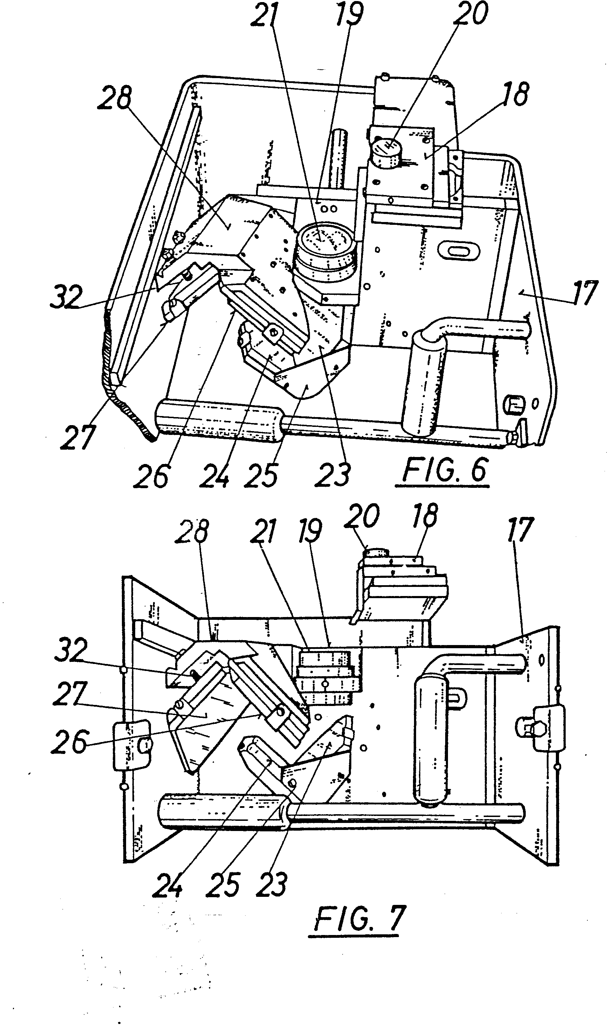

From Figures 6 to 11, it can be observed that the device for carrying out the procedure of this invention is based on a frame (17) on which the respective objectives (20 and 21) are placed by means of suitable support (18 and 19).

Objectives (20) is designed for obtaining the main image, and in this sense it can project the beam of light directly onto the light-sensitive paper, in accordance with the representation in the diagrams ora pair of parallel mirrors, not represented, can collaborate with the objective, thus achieving, as has already been said, a lateral displacement of the image so as to obtain a perfect centering of the image on the corresponding sector of the paper.

With regards to the second objective (21), and corresponding to the secondary image, it is assisted by a first pair of mirrors (23 and 24) placed orthogonally and assembled on a common support (25) with which a second pair of mirrors (26-27) collaborate, likewise assembled orthogonally on support (28).

The first pair of mirrors (23-24) determines the orthogonal deviations and in the same direction as the beam of light, while the second pair of mirrors (26-27) determines two more orthogonal deviations opposite the first ones, so that the light beam, after inciding on these two pairs of mirrors, recoups the original direction appreciably.

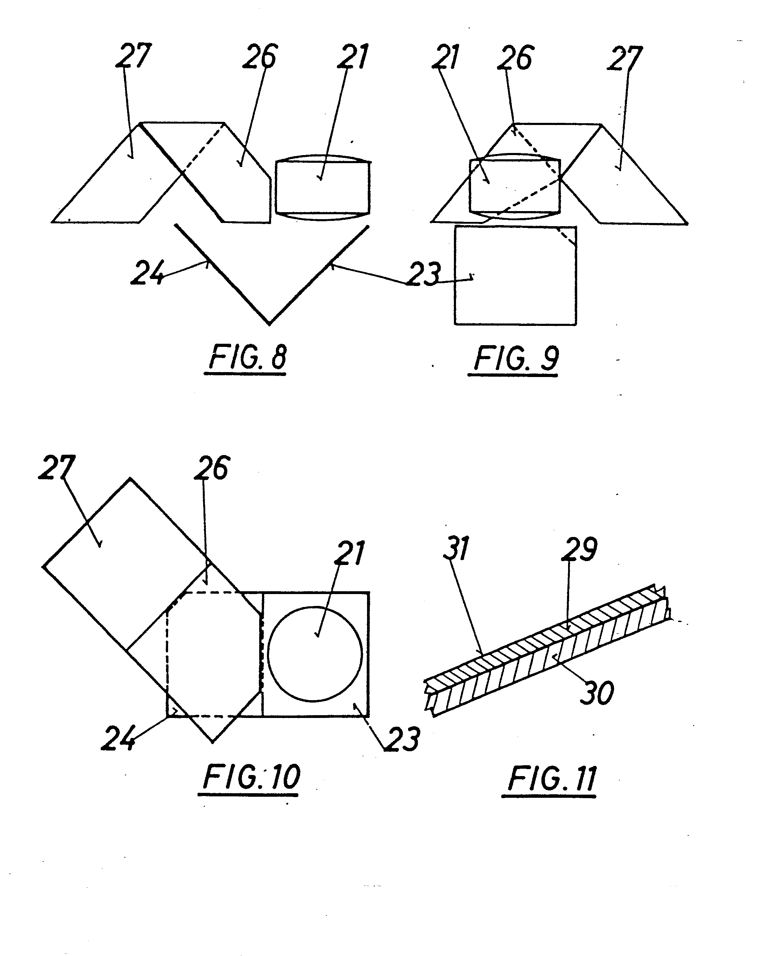

But moreover, the first pair of mirrors (23-24) forms an angle of 135° with regards to the second pair of mirrors (26-27) which is perfectly visible in Figure 10, thus having the second image undergo, throughout its trajectory, a turn of 90°, adopting this relative displacement position finally with regards to the main image obtained through objective (20).

the mentioned mirrors, as can be seen in the detail of Figure 11, are constituted by means of a glass (29) to which a metal support (30) is adapted, thus defining the specular surface (31).

Independent or not of the existence of parallel mirrors complementary to the main objective (20), for centering the corresponding image, mirrors (23, 24, 25 and 26) shall be assembles on their respective supports (25,28) through adjustment and setting means (32) which likewide allow the controlling of the final position of the secondary image on the light-sensitive paper, so that the image is perfectly set and adapted to the main image or a margin is determined with respect to the main image.

In any case, in accordance with the basic purpose of the invention, the obtaining of two images of a different amplitude but coinciding in contents is achieved on a sheet of light-sensitive paper, with the secondary or minor image being adapted to the main image with its length coinciding with the width of the latter, as well as an evident proportionality of dimensions.

This description need not be made any more extense for an export in the subject to understand the scope of the invention and the resulting advantages.

The materials, form, size and placement of the elements are variable as long as this does not suppose an alteration in the essence of the invention.

The terms in which the invention has been described must be taken in the widest sense, not as restricting.

- 11 -

0142959

Having described the nature of the invention, and also the way to put it into practice, it must be stated that the above-mentioned measures are susceptible to detail modifications as long as they do not alter the fundamental principle.

CLAIMS:

1. A method for obtaining a photographic composition of two identical images in orthogonal arrangement, characterised in that from one single negative, two objective systems are established, one of which is destined to the formation of the main image, and the second is destined to the formation of the secondary image which is orthogonal with regards to the first one, with the particular feature that in the first objective system, the suitable lateral displacement of the corresponding image is carried out, for its perfect centering on the corresponding sector of the light-sensitive paper, while in the second objective syste, the image is turned 90° through two reflecting assemblies making an angle of 135°, each one of which consists of two orthogonal reflecting elements, so that two identical, proportional images of different amplitude accede to the light-sensitive paper, with one of the larger edges of the image of less surface adjacent to one of the smaller edges of the image of greater surface, and with the positioning of the motives orthogonally displaced.

2. A method in accordance with claim 1 characterised by the fact that the reflecting assemblies are materialised in mirrors, total reflection optic prisms, or any other type of element able to establish the two optic tracks which relate the only negative with the two sectors of the light-sensitive paper.

3. A method in accordance with the above claims, characterised by the fact that the two differentiated objective systems are susceptible to having an element with transmittance and reflectance to 50% placed in front of them, the element could be a metallised mirror, or on a prismatic image-deviating cube, or any other suitable element which splits the beam of light and defines two independent trajectories, in which the reflecting assemblies mentioned in claim 1 are suiably added.

4. A method in accordance with the above claims, characterised by the fact that the secondary system which forms the 90° turned image, intercalates the actual objective between the two reflection systems, with the systems maintaining their relative positions (135°) and their composition of two orthogonal reflecting surfaces in each.

5. Device for carrying out the procedure in accordance with claims 1 to 4, characterised in that on a frame or suitable housing, in which there are means for positioning the negative, and optionally means for holding the source of light which creates the corresponding beam of light, two objective lenses are placed, these lenses defining two diverging trajectories for the beam of light, one corresponding to the main image and the other corresponding to the secondary image, having foreseen the placement in the trajectory of the beam of light corresponding to the secondary image, firstly of a pair of mirrors with a square-sided dihedral angle, in which a double reflection is produced, with a second pair of mirrors interposed in the trajectory of the beam of light also forming a square-sided dihedral angle, these two dihedral angles being at an angle of 135° in relation to each other, so that the beam of light, as well as the corresponding lateral displacements, undergoes a turn of 90° before reaching the light-sensitive paper.

6. Device in accordance with claim 5, characterised by the fact that in the trajectory of the beam of light, which passes the objective corresponding to the main image, there is a pair of parallel mirrors, which produce a lateral displacement in the said beam, so as to bring the main image suitable closer to the secondary image.

7. Device in accordance with claim 5, characterised by the fact that the 135° angle formed by the two pairs of mirrors corresponding to the secondary image is in a positive or negative direction depending on the positioning foreseen in the said image with regards to the main image.

8. Device in accordance with any of claims 5 to 7, characterised by the fact that the different mirrors are assembled in the housing of the device through support elements, fitted with adjustment and setting means, so as to control the incidence of the beams of light corresponding to the main and secondary images on the light-sensitive paper suitably.

FIG.1

FIG. 2

FIG.1'

A

11

10

*FIG. 3*

14

16

12

15

*FIG. 4*

14

16

13

15

*FIG. 5*

0142959

4/5

FIG. 6

FIG. 7

FIG. 8

FIG. 9

FIG. 10

FIG. 11

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 232 962 (SAUER) <br><br> * Figures 4,5 * <br><br> --- | 1 | G 03 B 27/44 |
| A | US-A-3 212 396 (SCHWARDT) <br><br> * Figures 1,4,5 * <br><br> ----- | 1 | |

|  |
|---|
| **TECHNICAL FIELDS SEARCHED (Int. Cl.4)** |
| G 03 B 27/44 <br> G 03 B 27/42 <br> G 03 B 27/52 <br> G 03 B 27/46 |

The present search report has been drawn up for all claims

| Place of search | Date of completion of the search | Examiner |
|---|---|---|
| THE HAGUE | 18-02-1985 | MEES G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82